# EUROPEAN PATENT APPLICATION

(11) **EP 4 803 875 A1**
(43) Date of publication of application: **09.09.2026**
(21) Application number: 24885237.8
(22) Date of filing: 02.08.2024
(51) Int. Cl.: G01M 7/02, G01M 17/04

(54) **VIBRATION TEST APPARATUS**

(30) Priority: 30.10.2023 JP 2023185667
(71) Applicant: Saginomiya Seisakusho, Inc., Tokyo 165-0033 (JP)
(72) Inventor: KAWANISHI, Hirofumi, Sayama-shi, Saitama 350-1395 (JP); OGAWA, Satoru, Sayama-shi, Saitama 350-1395 (JP); MASUYAMA, Ryotaro, Sayama-shi, Saitama 350-1395 (JP); HOSAKA, Tomohiro, Sayama-shi, Saitama 350-1395 (JP)
(74) Representative: Bandpay & Greuter
(86) International application number: PCT/JP2024/027714
(87) International publication number: WO 2025/094460

(57) **Abstract**

A vibration test apparatus includes: a linear motor configured to cause a mover to reciprocate in a linear direction, wherein a plurality of the linear motors are installed to be capable of causing the corresponding movers to reciprocate in a parallel direction to vibrate a support member configured to support a test body, thereby applying a vibration in the linear direction to the test body.

## Description

### Technical Field

The present invention relates to a vibration test apparatus configured to apply a vibration to a test body.

### Background Art

Vibration test apparatuses configured to forcibly apply a vibration are known in order to evaluate durability or performances of various members and devices which would be subjected to vibrations. Many vibration test apparatuses of this type use hydraulic apparatuses for vibrating a heavyweight test body. However, hydraulic vibration test apparatuses require a large-size hydraulic source, and have a high consumption energy and also a high maintenance cost. In addition, hydraulic control valves have poor output characteristics of acceleration of high-frequency wave (40 Hz or more) and cannot operated as commanded. Hence, it is necessary to perform processing of increasing or reducing command signals, also requiring time and effort. From this, in recent years, those using linear motors (actuators) which move linearly have been studied (for example, PTLs 1 and 2).

Since this linear-motor vibration test apparatus does not require electricity at the time of non-operation, a decrease in consumption energy can be expected, and this linear-motor vibration test apparatus does not require maintenance such as replacement of a lubricating oil and disassembly and cleaning of a hydraulic valve, and can thus be simply and easily used. Moreover, since the linear-motor vibration test apparatus can operate as commanded with respect to acceleration vibrations having a relatively high frequency up to about 100 Hz, the test can be executed without requiring time for signal processing. In addition, the linear-motor vibration test apparatus also has advantages such as a small time delay for commands (a fraction of that of hydraulics or less), and a good followability to a change in command values in real-time in a test in which a driving state is simulated, and thus a good usability.

### Citation List

### Patent Literatures

PTL 1: Japanese Patent No. 5466031
PTL 2: Japanese Patent No. 4885222

### Summary of Invention

### Technical Problem

However, in such a linear-motor vibration test apparatus, drive force for the linear motors is small as compared with actuators of a hydraulic system having a comparable size. For this reason, to use a linear-motor vibration test apparatus as it is to perform a vibration test of evaluating durability and performance of shock absorbers which are attached to wheels for ensuring the traveling quality of a test body requiring a large drive force, for example, a vehicle to alleviate the behavior (vibration) of the wheels, drive force to be outputted is insufficient, so that the support becomes impossible. In addition, in a case where the drive force to be outputted is small, it also become impossible to apply a vibration with a large acceleration to a test body at the time of the vibration test.

In view of this, an object of the present invention is to provide a linear-motor vibration test apparatus which can apply a sufficient vibration even to a heavyweight test body.

### Solution to Problem

An aspect of the invention of a linear-motor vibration test apparatus to solve the above-described problem is a vibration test apparatus including: a linear motor configured to cause a mover to reciprocate in a linear direction to apply a vibration in the linear direction to a test body, wherein a plurality of the linear motors are installed to be capable of causing the corresponding movers to reciprocate in a parallel direction to vibrate a support member configured to support the test body.

### Advantageous Effects of Invention

In this way, the aspect of the present invention can provide a linear-motor vibration test apparatus which can vibrate a support member supporting a test body by drive force of the plurality of linear motors, and can thus apply a sufficient vibration even to a heavyweight test body.

### Brief Description of Drawings

[Fig. 1] Fig. 1 is a front diagram showing a schematic overall configuration of a car vibration test system including a linear-motor vibration test apparatus according to an embodiment of the present invention;
[Fig. 2] Fig. 2 is a conceptual structure diagram showing a schematic overall configuration of the linear-motor vibration test apparatus;
[Fig. 3] Fig. 3 is diagrams showing a structure of one linear motor, (a) is a partially enlarged vertical sectional diagram of an upper portion of the linear motor as viewed in the same direction as in Fig. 2, and (b) is a schematic diagram showing a magnet configuration in a mover of the linear motor;
[Fig. 4] Fig. 4 is a transverse sectional view of one linear motor;
[Fig. 5] Fig. 5 is a conceptual block diagram for explaining control of the vibration test system;
[Fig. 6] Fig. 6 is a vertical sectional diagram showing a status of one linear motor before preparation of a test;
[Fig. 7] Fig. 7 is a vertical sectional diagram showing a status of one linear motor during the preparation; and
[Fig. 8] Fig. 8 is a vertical sectional diagram showing a status of one linear motor during the test.

### Description of Embodiments

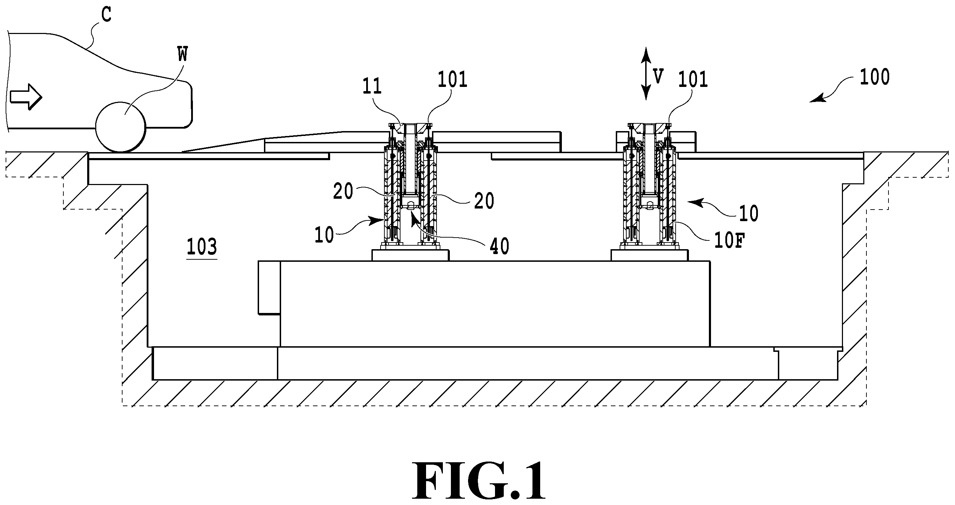

Hereinafter, embodiments of the present invention will be described with reference to the drawings. Fig. 1 to Fig. 8 are diagrams showing a linear-motor vibration test apparatus according to an embodiment of the present invention.

In Fig. 1, a vibration test apparatus 10 is mounted in a vibration test system 100 for a car C which performs evaluation tests for a durability, a vibration damping performance, and the like by applying, to each of four wheels W of the car (test body) C, vibrations to cause vertical movements in a vertical direction V (reciprocation in a linear direction). The vibration test system 100 is constructed such that the car C whose four wheels W are supported in a non-rotatable manner is placed in a resting state on adjustment plates 101 to perform vibration tests. Here, this vibration test system 100 has the vibration test apparatuses 10 disposed for the respective four wheels W in a space 103 dug in the ground (in the height) where the car C travels, and the vibration test apparatuses 10 are prepared with adjustment plates 101 on which the four wheels W of the car C are made non-rotatable such that the car C cannot travel, and are placed below the adjustment plates 101. Note that each adjustment plate 101 includes, in the ground height, a mechanism, which is not shown, for adjusting the position in forward and backward traveling directions of the car C as well as in a lateral direction.

The vibration test system 100 includes four vibration test apparatuses 10 mounted therein and located to function below the adjustment plates 101 for the respective four wheels W of the car C, and outputs desired drive forces by being vibrated and controlled by a control system (control device) 50, which will be described later, to reproduce a behavior received from the road surface during travel by applying the same or different vibrations to the respective four wheels W. Here, the control system 50 may be individually prepared for the four vibration test apparatuses 10 and set and control each vibration test apparatus 10, but the control system 50 in the present embodiment is configured to control and drive the four vibration test apparatuses 10 overall in the same or different manner to perform the vibration test.

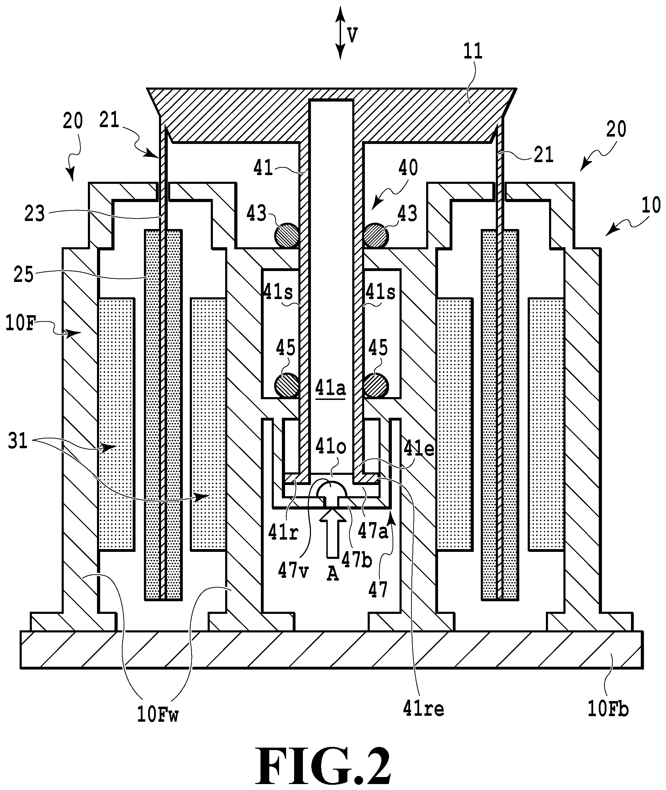

Also as shown in Fig. 2, the vibration test apparatus 10 is configured such that two pairs of linear motors (actuators) 20 and a pair of air spring mechanisms 40 are integrally housed in a housing 10F. In this vibration test apparatus 10, support members 11 which are coupled and fixed below the adjustment plates 101 of the respective four wheels W of the vibration test system 100, are coupled and integrated with end portions of movers 21 of the plate-shaped members of the two pairs of linear motors 20 and moving plates 41 of plate-shaped members of the pair of air spring mechanisms 40, such that the moving plates 41 of the air spring mechanisms 40 vertically move (reciprocate) in a linear vertical direction V, together with the movers 21 of these linear motors 20, to apply vibrations to the four wheels W of the car C on the adjustment plates 101. That is, end portions of the pluralities of movers 21 of the linear motors 20 and moving plates 41 of the air spring mechanisms 40 are coupled and fixed to the common support member 11, and reciprocate in the vertical direction and the parallel direction to vibrate the wheels W (shock absorbers) of the car C, which is the test body, to be capable of performing the vibration test. Note that the vibration test apparatuses 10 are positioned and fixed by coupling base members 10Fb in lower portions of the housings 10F onto a base inside the installation space 103 of the vibration test system 100.

The linear motors 20 are disposed respectively at symmetrical positions sandwiching the air spring mechanism 40, such that the pair of movers 21 simultaneously (synchronously) move vertically to apply two pairs of drive forces to the support members 11 and apply vibrations to the four wheels W of the car C on the adjustment plates 101 to perform the vibration test for the shock absorbers, which are not shown. Here, although the vibration test apparatus 10 including two pairs of linear motors 20 will be described as an example in the present embodiment, it goes without saying that not only two pairs but three or more pairs may be included.

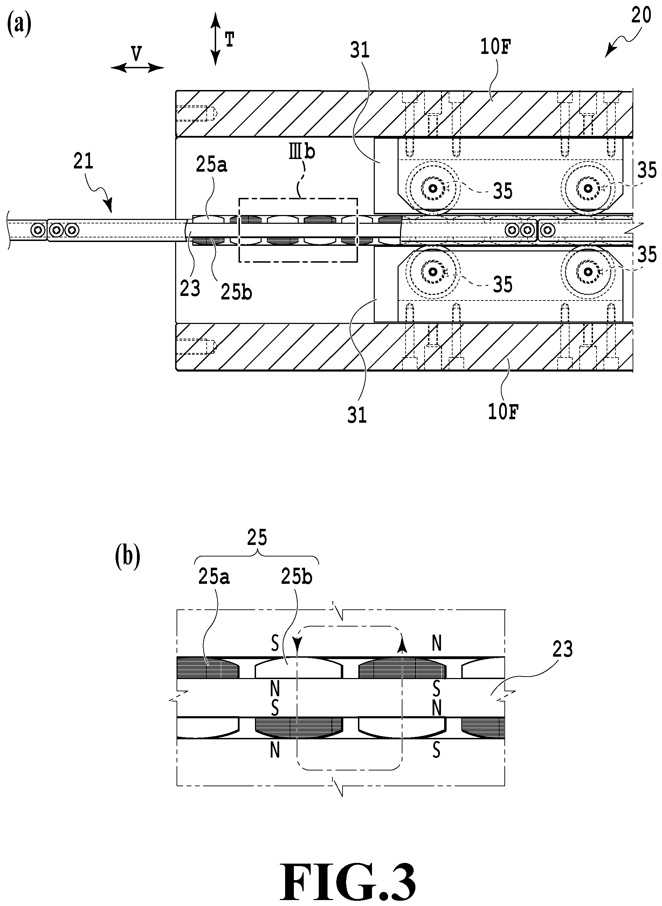

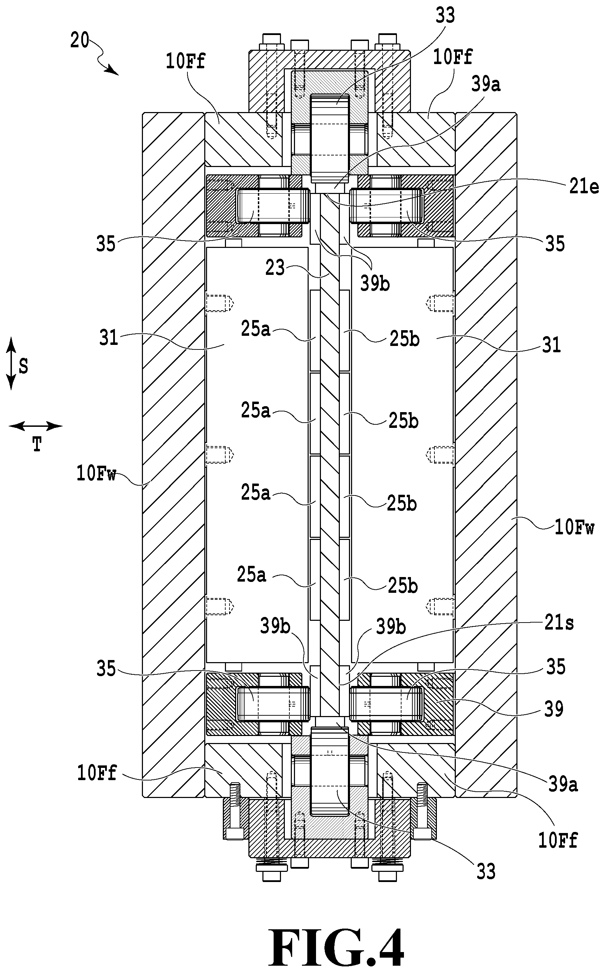

As shown specifically in Fig. 3 and Fig. 4, the linear motor 20 is assembled in the form of a cuboid in which wall portions 10Fw of the housing 10F are located at positions facing the plate-shaped mover 21, and leg portions 10Ff are sandwiched between the wall portions 10Fw, and constructed such that a pair of stators 31 are fixed to face each plate-shaped mover 21, which vertically moves, while being opposed to each other on the inner surface sides of the wall portions 10Fw.

The mover 21 of the linear motor 20 includes a yoke 23 of a plate-shaped iron member which is opposed to the stators 31 placed on the inner surface sides of the wall portions 10Fw of the housing 10F and which allows magnetic fluxes to pass therethrough in such a manner as to receive power (magnetic force), which is vertically moved. At portions of the yoke 23 which face the stators 31, magnets 25 are disposed such that the positive poles and the negative poles are alternately located. In addition, coils, which are not shown, are disposed on the stators 31 of the linear motor 20, and apply magnetic force causing the mover 21 to reciprocate as being supplied with an electric power from a power supply.

This mover 21 of the linear motor 20 is supported by a pair of end-side rollers 33, which are rotatably supported on the leg portions 10Ff of the housing 10F and which face and are in contact with this mover 21 in a vertically movable manner on both end side 21e sides of the plate-shaped member in a width direction S, and is also supported by two pairs of end-surface rollers 35, which are rotatably supported on the wall portions 10Fw of the housing 10F and which face and are in contact with this mover 21 in a vertically movable manner, on both surface 21s sides of the end portions of the plate-shaped member in the width direction S.

In addition, on the mover 21 of the linear motor 20, magnets 25a (for example, north pole) and magnets 25b (for example, south pole) are disposed such that the magnetic poles (south pole and north pole) are alternately arranged in the vertical direction V of the yoke 23, so that the magnetic poles are inverted also on both surface sides of the thickness direction T in the yoke 23. Note that the durability of the yoke 23 of the mover 21 is ensured by fixing abutment plates 39a on both end side 21e sides in the width direction S which the end-side rollers 33 face and are in contact with in a rotatable manner, and also fixing abutment plates 39b on both surface 21s sides of the end portions in the width direction S which the end-surface rollers 35 face and are in contact with in a rotatable manner. However, these may be omitted such that the yoke 23 is supported by causing various rollers 33 are 35 to directly face and be in contact with the yoke 23.

Here, by employing such a configuration in the mover 21 of the linear motor 20, the magnets 25 can be disposed without considering magnetic pole saturation by the magnets 25, and the thickness of the yoke 23 in the thickness direction T can be minimized as much as possible. Moreover, the mass of the mover 21 can be reduced, and output acceleration and responsiveness of the vibrating operation can be improved. Note that since the weight of the mover 21 does not contain the weights of the stators 31, the group of rollers 33, 35, and the like on the housing 10F side, there is no need to increase the magnetic force (output) in the vertical movement unproductively, and it is also possible to avoid a decrease in acceleration, and also avoid a decrease in service life due to the weight.

Referring back to Fig. 2, the air spring mechanism 40 is housed inside the housing 10F to be located between the two pairs of linear motors 20, and the moving plate 41 of the air spring mechanism 40 is supported by two pairs of rollers 43 and 45, which are located at upper and lower positions and rotatably installed and which face and are in contact with the moving plate 41 in a vertically movable manner on both side surface 41s sides like the plate-shaped mover 21 of the linear motor 20.

The moving plate 41 of the air spring mechanism 40 is formed in a hollow plate shape having an internal space 41a, and an end portion 41e of the moving plate 41 on the opposite side to the support member 11 is open, and plate-shaped ribs 41r which protrude from both side surfaces 41s outward in the orthogonal direction are formed on the end portion 41e on the opposite side to the support member 11.

This air spring mechanism 40 includes a damper 47 which is installed between the wall portions 10Fw of the housing 10F on both sides to cover the entire end portion 41e having the plate-shaped ribs 41r of the moving plate 41. The damper 47 is in contact with the end sides 43re of the plate-shaped ribs 41r of the moving plate 41 in a vertically movable manner while maintaining airtightness. An internal space 47a of the damper 47 of the air spring mechanism 40 communicates with the internal space 41a via an opening portion 41o between the plate-shaped ribs 41r of the moving plate 41, and a valve 47v which fills (encloses) the insides of the internal spaces 47a and 41a with an external air A at a desired pressure to maintain the closed state (seal) is installed on a bottom portion 47b.

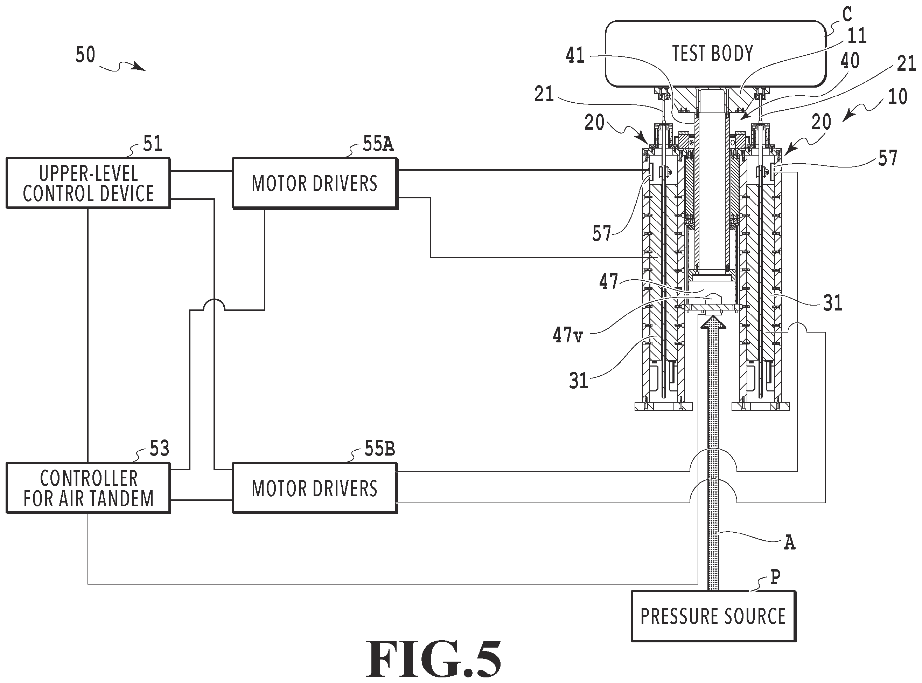

With this structure, the air spring mechanism 40 can fill the insides of the internal space 41a of the moving plate 41 together with the internal space 47a with a desired amount of the external air A via the valve 47v of the damper 47 from a pressure source P (shown in Fig. 5), and bias the moving plate 41 upward with a desired air pressure as an elastic force, that is, in the moving direction of the mover 21 of the linear motor 20 and the parallel direction to function as an elasticity application mechanism which supports the support member 11 together with the pair of linear motors 20. Note that the air pressure of the air spring mechanism 40 is such that the filling amount of the external air A inside the internal spaces 47a and 41a of the damper 47 and the moving plate 41 can be increased or reduced by the valve 47v, so that the elastic force (air pressure) to be applied to the support member 11 can be adjusted in accordance with the weight of the test body.

Then, as shown in Fig. 5, the vibration test apparatus 10 is constructed to detect the behavior of the support member 11 by detecting the vertical movements of the respective movers 21 of the pair of linear motors 20 with encoders 57 having a high resolution which is installed on the wall portions 10Fw of the housing 10F on the stator 31 side, and to control the drive of the air spring mechanism 40 together with the pair of linear motors 20 based on the detection information (signals) of each encoder 57 with the control system (control unit) 50.

The control system 50 is constructed such that an upper-level control device 51, a controller 53 for air tandem, and a pair of motor drivers 55A and 55B are connected to be capable of communicating various signals, and associated to drive together. To control the entire vibration test apparatus 10 overall, the upper-level control device 51 passes drive signals to the controller 53 and the motor drivers 55A and 55B to cause the motor drivers 55A and 55B to send drive electric power to the stators 31 of the linear motors 20 to vertically move the movers 21, and causes the valve 47v in the damper 47 of the air spring mechanism 40 to open and close to supply the pressure air A from the pressure source P to adjust the filling air amount into the internal spaces 41a and 47a of the moving plate 41 and the damper 47, thereby adjusting the elastic force for biasing the moving plate 41 upward.

Specifically, the upper-level control device 51 derives vibrating conditions by obtaining, via the motor drivers 55A and 55B, displacement information of the movers 21 (support member 11) using the encoders 57 in order to execute the vibration test on the test body (car) C based on various pieces of setting input information in accordance with a control program stored in advance in a memory, which is not shown, and by sending command information according to the vibrating conditions to the motor drivers 55A and 55B, the upper-level control device 51 supplies drive current to the stators 31 of each linear motor 20.

This upper-level control device 51 supplies drive current to adjust and control the opening and closing of the valve 47v of the damper 47 of the air spring mechanism 40 by sending, to the controller 53, command information according to the supporting conditions of the test body C based on the displacement information by the encoders 57 which is obtained via the motor drivers 55A and 55B in order to enable execution of the vibration test on the test body C in accordance with the above-described control program.

Here, as the signal commands used in the above-described units 51, 53, 55A, and 55B of the control system 50, either analog signals or digital signals may be employed, and the signal commands may be selected in consideration of influences of noises and the like. In this control system 50, signal lines of the pair of motor drivers 55A and 55B as well as the encoders 57, which have the same functions to be driven, and electric power supply lines, and the like are routed such that the line distances become equal to one another to make various conditions (the signal intensity, the timing, and the like) uniform.

The controller 53 for air tandem executes drive control of causing the air spring mechanism 40 to generate a pressure for holding the car C at a desired height in order to enable execution of the vibration test on the test body C in accordance with a control program stored in advance in the memory, which is not shown, in the same manner as the upper-level control device 51. In this event, the controller 53 supplies drive current to control the valve 47v to open and close to supply and fill the insides of the internal spaces 47a and 41a of the damper 47 and the moving plate 41 of the air spring mechanism 40 with the pressure air A from the pressure source P so as to achieve an air pressure which exerts an elastic force to such an extent that supports the test body C at a height where the amplitude during the vibration test can be ensured alone without cooperating with the drive forces of the pair of linear motors 20.

Specifically, the controller 53 of the present embodiment monitors the drive force (drive current to be supplied to the stators 31) outputted by the pair of linear motors 20 through the motor drivers 55A and 55B, and executes the control to open and close the valve 47v of the damper 47 of the air spring mechanism 40 such that the load as thrust becomes zero, and thus maintains the supporting state by closing the valve 47v at a timing to support the test body C alone. In other words, the air pressure (elastic force) of the air spring mechanism 40 is set to be large to such an extent that the drive force of the linear motors 20 can be made zero, to ensure such a large air pressure that can suppress a fluctuation of the air pressure of the air spring mechanism 40 due to a vibration in the vibration test by the linear motors 20, thereby avoiding a large fluctuation of the air pressure which would become a disturbance in the vibration test.

Here, in the case of using the vibration test apparatus 10 as a vibration test apparatus for shock absorbers of wheels W of a car C, the four wheels of the car C are placed on the adjustment plates 101, and in the case of removing the car C, during the preparation, during the standby, and during the test are switched to be displayed by using a switch so that the vibrating operation should not unintentionally start. Thus, as long as the controller 53 does not detect the supporting state of the test body C conducted by the air spring mechanisms 40 alone, the vibration test by the pair of linear motors 20 does not start, and the vibration test on the test body C is started by turning on the switch for starting the test.

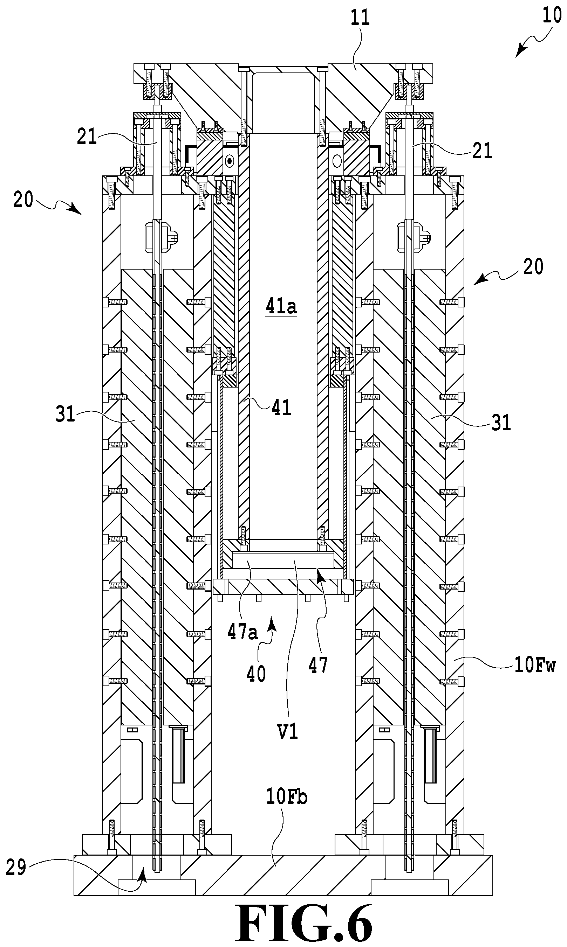

In other words, the vibration test apparatus 10 is configured such that as shown in Fig. 6, before the preparation in which the wheel W (four wheels) of the car C is placed on the adjustment plate 101, the pressure air A is not supplied into the damper 47 of the air spring mechanism 40 such that the internal space 47a has a minimum volume V1, and lowermost end portions of the movers 21 of the pair of linear motors 20 enter relief grooves 29 which are open in the base member 10Fb of the housing 10F, to position the support member 11 at a height before the preparation.

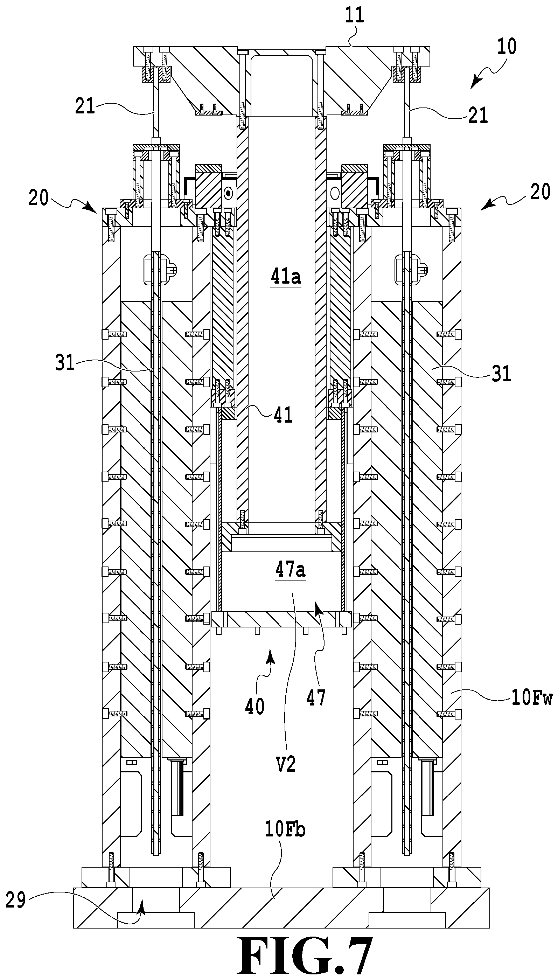

Then, the vibration test apparatus 10 is configured such that as shown in Fig. 7, during the preparation in which the wheel W (four wheels) of the car C, which has been placed on the adjustment plates 101, is held at a vibration test height, the upper-level control device 51 and the controller 53 supply the pressure air A into the damper 47 of the air spring mechanism 40 from the pressure source P such that the internal space 47a has a test volume V2. The vibration test apparatus 10 then grasps displacement of the movers 21 based on detection signals obtained by the encoders 57, and controls the opening and closing of the valve 47v to close the valve 47v, thereby positioning the support member 11 at the height during the preparation and before the test (during the test). In this event, the upper-level control device 51 may supply the electric power to the stators 31 of the pair of linear motors 20 to drive the movers 21, thereby assisting the ascent of the test body C. In this case, after the support member 11 is held at the height during the preparation, the supply of the electric power to the stators 31 of the pair of linear motors 20 is gradually reduced to make an ascending load of the test body C by the movers 21 zero.

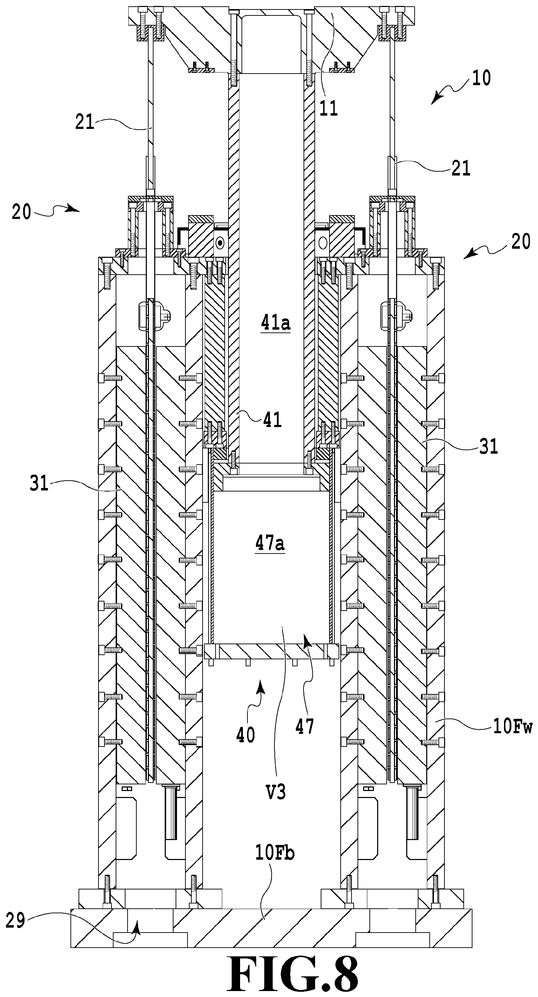

After this, as shown in Fig. 8, the vibration test apparatus 10 is configured such that during the test in which the wheel W (four wheels) of the car C, which is placed on the adjustment plate 101, is held at the vibration test height, while the controller 53 is maintaining the closed state of the valve 47v of the damper 47 in order to maintain the holding of the test body C at the test height by the air spring mechanism 40, the upper-level control device 51 executes the supply of current to the stators 31 of the pair of linear motors 20 by using the motor drivers 55A and 55B based on displacement information obtained by the encoders 57 to execute the vibration test on the test body C. Note that Fig. 8 shows a timing during the test at which ascending acceleration is added to the support member 11 to apply shock of getting over an obstruction to the wheel W of the car C on the adjustment plate 101. The moving plate 41 of the air spring mechanism 40 is pulled up by the ascent of the movers 21 of the linear motors 20, so that the internal space 47a of the damper 47 has had the maximum volume V3, and the air pressure has also been reduced.

In this event, the vibration test apparatus 10 adjusts and controls the supply of the electric power to the stators 31 to make uniform the vertical movements of the movers 21 of the pair of linear motors 20 and maintain the horizontal state of the adjustment plate 101, and further is capable of changing the vibrating condition for each wheel W (four wheels) of the car C.

Hence, since the vibration test apparatus 10 includes the pair (a plurality of) linear motors 20 as necessary, there is no need to prepare a linear motor having an unnecessarily large drive force, and the vibration test apparatus 10 can avoid incapability to add vibrations at desired accelerations, which would be caused by an insufficient drive force on the contrary. In addition, since the vibration test apparatus 10 includes the air spring mechanism 40 which is capable of easily and simply adjusting the air pressure and ensures a stable air pressure, drive force necessary for the linear motors 20 can be further reduced. Moreover, before vibration, since the test body C is supported by the air spring mechanism 40 without need of the drive force of the linear motors 20, the drive force necessary for the linear motors 20 can be further reduced.

As described above, the vibration test apparatus 10 of the present embodiment, can perform the vibration test in which the wheels W of the car C are vibrated with the drive force of the pair of linear motors 20 while the car C, which is the test body, is supported with the air pressure of the air spring mechanism 40, so that each wheel W of the heavyweight car C can be vibrated with a sufficient acceleration.

The scope of the present invention is not limited to the above-described exemplified embodiment described and shown in the drawings, and encompasses all embodiments bringing about the effects equivalent to those intended for the present invention. Moreover, the scope of the present invention is not limited to the combinations of features of the invention which are specified by each claim, and can be defined by every desired combinations of specific features among all the features disclosed.

### Reference Signs List

- 10: vibration test apparatus
- 10F: housing
- 11: support member
- 20: linear motor
- 21: mover
- 23: yoke
- 25: magnet
- 31: stator
- 40: air spring mechanism
- 41: moving plate
- 41a: internal space
- 47: damper
- 47a: internal space
- 47v: valve
- 50: control system
- 51: upper-level control device
- 53: controller
- 55A, 55B: motor driver
- 57: encoder
- 100: vibration test system
- A: external air (pressure air)
- C: car (test body)
- W: wheel

## Claims

1. A vibration test apparatus comprising:
a linear motor configured to cause a mover to reciprocate in a linear direction to apply a vibration in the linear direction to a test body, wherein
a plurality of the linear motors are installed to be capable of causing the corresponding movers to reciprocate in a parallel direction to vibrate a support member configured to support the test body.

2. The vibration test apparatus according to claim 1, wherein
the respective movers of the linear motors are coupled to the support member which is common.

3. The vibration test apparatus according to claim 1, wherein
the support member includes an elasticity application mechanism configured to apply an elastic force to move the support member in a moving direction of the movers of the plurality of linear motors and the parallel direction.

4. The vibration test apparatus according to claim 3, comprising:
an air spring mechanism as the elasticity application mechanism.

5. The vibration test apparatus according to claim 4, wherein
the air spring mechanism includes a structure configured to enable an air pressure for applying the elastic force to be adjusted.

6. The vibration test apparatus according to claim 4, wherein
the air spring mechanism ensures a volume that can suppress a fluctuation of the air pressure due to a vibrating operation of the support member by the plurality of linear motors, as a sealed air for generating an air pressure for applying the elastic force.

7. The vibration test apparatus according to claim 1, comprising:
a control unit configured to execute control operation for each of the movers of the plurality of linear motors to apply the same vibrating operation to the support member.

8. A vibration test system wherein a plurality of the vibration test apparatus according to any one of claims 1 to 7 are disposed in such a manner as to be located below a test body, to execute a vibration test on the test body.

9. A car shock absorber test apparatus wherein the plurality of the vibration test apparatuses in the vibration test system according to claim 8 are disposed in such a manner as to be located below wheels of a car, to execute a performance test on a shock absorber of the car.
